# EUROPEAN PATENT APPLICATION

(11) **EP 4 607 882 A1**
(43) Date of publication of application: **27.08.2025**
(21) Application number: 25159331.5
(22) Date of filing: 21.02.2025
(51) Int. Cl.: H04L 45/586, H04L 49/00

(54) **RING CONFIGURED SERVER NETWORK ARCHITECTURE AND METHODOLOGY**

(30) Priority: 22.02.2024 US 202418583971
(71) Applicant: Google LLC, Mountain View, CA 94043 (US)
(72) Inventor: Simlai, Ananya, London, SW1W 9TQ (GB); Dasgupta, Santanu, Mountain View, California, 94043 (US); Coolidge, Ian Kenneth, Mountain View, California, 94043 (US)
(74) Representative: Betten & Resch

(57) **Abstract**

The technology is directed to methods and systems in which network hardware components and their associated functionality are incorporated into servers, the network hardware components functioning to couple the servers to one or more networks. The network hardware components include virtual routers and are configured to form a ring network that includes their respective servers and an aggregation switch. The routing capability provided via the network hardware components function within the network to advertise routes to each other and provide the aggregation switch access to pathways that can be used to deliver data packets to their destination without using other switches, e.g., a top-of-rack switch.

## Description

### BACKGROUND

High traffic network systems deal with heavy demands associated with routing and processing large volumes of data and high network throughputs. Modern day networks typically employ geographically dispersed data centers housing the equipment that provide such high availability networks. Industry standard models for these data centers and the high availability networks typically house equipment in racks. Those racks typically include multiple top-of-rack switches, to improve reliability by, for example, eliminating potential single point of failures in the network. High availability networks require additional space, power, and cooling resources associated with the equipment. All of this comes at a cost. Further, additional costs are associated with maintaining the equipment including the top-of-rack switches, aggregation switches, servers, etc. and connectors required to physically connect the equipment. Solutions that improve the reliability of such networks and/or have the effect of reducing costs results in efficiency gains for data center operators.

### SUMMARY

The disclosed technology is directed to methods and systems in which one or more network hardware components and their associated functionality are configured to allow a computing device to communicate over a network with other computing devices. In accordance with the disclosed technology, a network hardware component (NHC) is a network interface device that includes a virtual routing functionality, switching functionality, and/or encryption/decryption functionality. The NHC may take the form of an interface card that can be incorporated into a server, e.g., a pluggable interface card, that allows the server to communicate over a network with other devices coupled to the network. Further, servers equipped with NHCs may be arranged within a rack in a ring configuration via the NHCs by virtue of a NHC having the capability to operate as a virtual router. Further, the inclusion of the routing capability within the NHC, along with the ring configuration, can eliminate the need for top-of-rack ("ToR") switches in rack configurations. In addition, implementing the routing functionality on the NHC alleviates, or at minimum reduces, the need to tax the computing resources of servers to provide routing functionality. Further, where the NHC is equipped with encryption functionality, encryption may be done on the fly and further alleviate the server from having to perform this functionality.

An NHC may take the form of a network interface card or controller ("NIC") or an infrastructure processing unit ("IPU") configured to provide routing functionality or that is configured to eliminate or reduce the need for ToRs. The routing, switching and encryption/decryption functionality may be implemented using one or more processing devices included in the NHC, NIC or IPU. The described methods and systems, therefore, support transport of data units over a networking system by using the virtual routers and processing devices of the network hardware components to determine transmission paths, e.g., least cost paths, as part of data processing. By utilizing the computing resources of the NHC, data transport, e.g., routing, switching, etc., does not use overhead of the servers.

As mentioned above, the disclosed technology may take the form of a ring topology network architecture formed by coupling the ports of the NHCs by, for example, chaining the port of one NHC to a neighboring NHC. For instance, the network architecture may include an aggregation switch and four servers, where each server is equipped with at least one NHC. The first server is then connected to the aggregation switch and the second server, the second server is connected to the first server and the third server, the third server is connected to the second server and the fourth server, and the fourth server is connected to the third server and the aggregation switch. In a typical example, the aggregation switch receives routes from each NHC along with the IP addresses held by the NHC. The aggregation switch then determines routes for transporting data between the NHCs using general routing protocols.

Aspects of the disclosure relate to a system for configuring a data center, comprising an aggregation switch, a plurality of network hardware components, a plurality of servers housed in a rack. The aggregation switch may be configured to receive data communicated over a network. The plurality of network hardware components may comprise a first network hardware component and a second hardware component. In the plurality of servers, each server has at least one of the plurality of network hardware components, wherein the first network hardware component is associated with a first server of the plurality of servers and the second network hardware component is associated with a second server of the plurality of servers. The first network hardware component may be coupled to the aggregation switch and to the second network hardware component and the second network hardware component is coupled to the aggregation switch. The aggregation switch, the first network hardware component and the second network hardware component may be coupled together in a ring architecture.

In some examples, at least the first network hardware component may include a first virtual routers and the second network hardware component may include a second virtual router. Each virtual router may receive routes from the other virtual router and may generate a routing table based on the routes received. The virtual router may advertise routes to the aggregation switch.

In some examples, only the first and second network hardware components have virtual routers and the remaining network hardware components of the plurality of network hardware components have routing agents. The system may further comprise a third network hardware component associated with a third server, the third network hardware component coupled to the first network hardware component and the second hardware network component.

The network hardware components may have a central processing unit core distinct from processing devices of a given server that includes the given network hardware component. Each network hardware component may further comprise a network interface controller or card, or an infrastructure processing unit.

Aspects of the disclosure relates to a communication system comprising an aggregation switch, a plurality of servers, and a plurality of network hardware components. The plurality of network hardware components may comprise a first network hardware component included in a first server and a second network hardware component included in a second server, each of the first network hardware component and second network hardware component configured to manage network connections for, respectively, the first network hardware component and second network hardware component. The first network hardware component includes a first virtual router and the second network hardware component includes a second virtual router, each include a virtual router operable to advertise routes to the other virtual router. In some examples, each virtual router may be operable to advertise routes to the aggregation switch. In some examples, each virtual router may be operable to advertise a cost associated with a route to the aggregation switch.

The first network hardware component may have a first port and a second port and the second network hardware component may have a third port and a fourth port and wherein the first port of the first network hardware component is connected to the aggregation switch and the second port of the first network hardware component is coupled to the third port of the second network hardware component, and the fourth port of the second network hardware component is coupled to the aggregation switch. In some examples, the first network hardware component may be configured to encrypt data generated by the first server.

Aspects of the disclosure relate to a system comprising a first server, and a first network hardware component installed in a first computer or the first server. The first network hardware component may be configured to connect the first server to a network. The first network hardware component may include a first virtual router configured to advertise routes to a second virtual router housed in a second server. The first network hardware component may be installed in a slot on the first server for housing a network interface card. The first network hardware component may include a first processing device distinct from other processing devices associated with the first server.

In some examples, the first network hardware component may be configured to instantiate the first virtual router. The first virtual router may be configured to advertise routes to an aggregation switch. The first virtual router, the aggregation switch and the second virtual router may be arranged in a ring configuration in which the aggregation switch is coupled to a first port on the first network hardware component and a second port on the first hardware component is coupled to a first port on a second hardware component associated with the second virtual router, and a second port on the second hardware component is coupled to the aggregation switch. The first virtual router may be configured to operate as Layer 3 switch based on an Open System Interconnect model.

Further aspects of the disclosure relate to methods and systems in which network hardware components and their associated functionality are incorporated into servers, the network hardware components functioning to couple the servers to one or more networks. The network hardware components include virtual routers and are configured to form a ring network that includes their respective servers and an aggregation switch. The routing capability provided via the network hardware components function within the network to advertise routes to each other and provide the aggregation switch access to pathways that can be used to deliver data packets to their destination without using other switches, e.g., a top-of-rack switch.

### BRIEF DESCRIPTION OF THE DRAWINGS

FIG.1 is a block diagram of an example system architecture, according to aspects of the disclosure.
FIG. 2A is a block diagram of an industry standard high availability network architecture.
FIG. 2B is a block diagram of an industry standard network architecture.
FIG. 3 is an example system diagram, according to aspects of the disclosure.
FIG. 4 is a schematic illustration of a network hardware component, according to aspects of the disclosure.
FIG.5 is a block diagram illustrating a network architecture configured to perform distributed routing of a data unit, according to aspects of the disclosure.
FIG.6 is a block diagram illustrating a network architecture configured to perform centralized routing of a data unit, according to aspects of the disclosure.
FIG.7 is a flow chart describing a method for routing data by the network architecture, according to aspects of the disclosure.

The figures are not necessarily to scale, emphasis instead generally being placed upon illustrative principles. The figures are to be considered illustrative in all aspects and are not intended to limit the invention.

### DETAILED DESCRIPTION

Aspects of the disclosed technology include systems and/or methods for transporting data in which a network architecture makes use of network hardware components ("NHCs") that include a routing capability and that are arranged in a ring or chained configuration. The NHCs function to provide network routing and/or switching capability to the equipment (e.g., a host computer or server) in which they are incorporated. Further, NHCs can be optionally implemented to include an encryption/decryption capability.

For instance, the disclosed technology may be employed in a data center by equipping host machines or servers with NHCs. A data center employing the disclosed network architecture may save costs by eliminating, or at least reducing, the need for ToR switches. Further, this configuration eliminates, or at least reduces, the power required to run, cool, and maintain the ToR switches. This network architecture also inherently supports high availability ("HA") network configurations by providing at least two paths for a data unit to be transported and eliminating the single point of failure scenario that is typical with one or no ToR switches architectures. The ring configuration further reduces the demand on the host server's processing bandwidth, by offloading routing functionality to the NHCs.

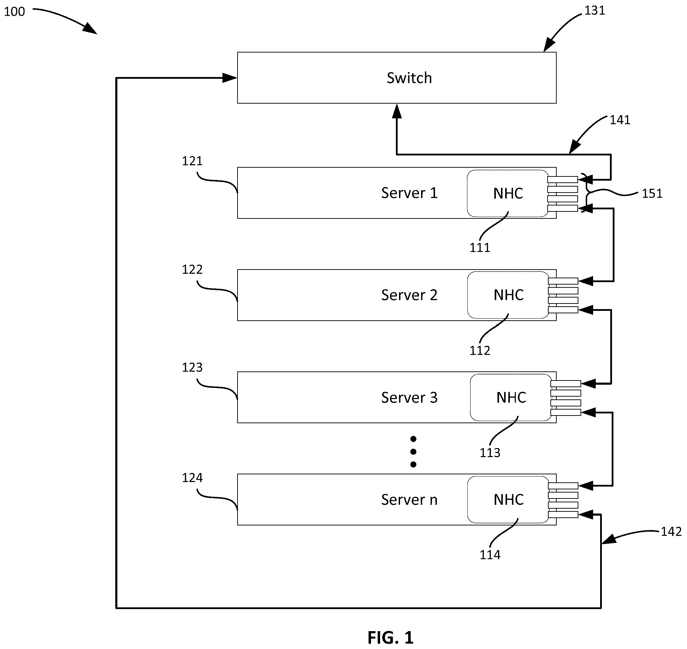

FIG. 1 illustrates an example of a physical configuration of a system or network architecture 100, according to aspects of the disclosure. The architecture 100 may be implemented in a data center, which is sometimes referred to herein as chained data center 100. As shown, system architecture 100 includes a switch 131, a plurality of servers 121-124, wherein each server contains a network hardware component, shown as NHC 111-114. Though architecture 100 depicts four servers, a network architecture as described herein will typically include at least two servers and at least two network hardware components. Each network hardware component may have a plurality of ports 151. In the example shown, each network hardware component has four ports. In other examples, a network hardware component may have at least two ports. Further, the number of ports may vary between NHCs. For example, one NHC may have four ports, a second NHC may have two ports and a third NHC may have eight ports. The ports 151 are typically used to connect the server or an NHC to other hardware within the data center.

As shown, each server 121, 122, 123 and 124 is coupled to another server via the plurality of ports 151 of the NHCs 111-114. In addition, servers 121 and 124 are connected to switch 131. Specifically, the first server 121 is connected to the switch 131 and the second server 122, the second server 122 is connected to the first server 121 and the third server 123, the third server 123 is connected to the second server 122 and the fourth server 124, and the fourth server 124 is connected to the third server 123 and the switch. At least two servers should be coupled to the switch 131, such as via link 141 and link 142. In this regard, link 141 and link 142 may include additional equipment between the switch 131 and, respectively, server 121 and server 124. The arrangement of the NHCs, and by extension the servers associated with the NHCs, results in ring architecture resulting from the chaining of each of the NHCs.

Switch 131 will typically be an aggregation switch. An aggregation switch is a networking device that allows multiple network connections to be bundled together into a single link. The aggregation switch may be any networking hardware capable of controlling data sent from an access layer switch and reporting data to a core layer switch. The aggregation switch may be configured to perform specific functions such as local routing, filtering, traffic balancing, QoS priority management, processing data for security mechanisms, internet protocol ("IP") address translation, and multicast management. In some examples, the aggregation switch may be a cell site router (CSR). In some examples, the switch may also include a memory. The memory may store routing information relating to connections to the switch.

In some examples, NHCs 111, 112, 113, 114 may be an advanced networking device with programmable accelerators and Ethernet connectivity that accelerates and manages network, switching, and routing functions using tightly coupled, dedicated, programmable cores. A network hardware component can also offer processing offload to increase performance and efficiency. Additionally, it also can be configured to provide an extra layer of security by offering security isolation to run processing software and customer/tenant software on physically separate sockets. As it relates to this disclosure, a network hardware component may generally be understood as any network interface processing unit or similar technology capable of coupling a processing device to a network and that includes at least a virtual routing functionality and/or switching or security functionality, including an infrastructure processing unit ("IPU"), a central processing unit ("CPU"), a data processing unit ("DPU"), or a network interface controller/ card ("NIC") with such functionality.

In accordance with an aspect of the disclosed technology, NHCs 111, 112, 113, 114 are adapted to, or alternatively configured to, include virtual routing functionality. In this regard, a network hardware component may also be configured to include switching functionality. The routing functionality causes a network hardware component to advertise routes to the aggregation switch as well as the IP addresses held by the network hardware component. In addition, the switching functionality allows a network hardware component to effectively operate as a hardware switch by receiving and delivering packets between hardware components physically attached to the network hardware component, e.g., other network hardware components, an aggregation switch.

The connections between the NHCs will typically be wired connections through the ports 151 of the NHCs of each respective server. The wired connections may be made with cables, such as copper cables, ethernet cables, fiber cables, coaxial cables, twisted pair cables, fiber-optic cables, etc. The connections at the NHCs allow for bidirectional data traffic flow allowing for a ring topology. In some examples, there may be more than two connections made from each NHC. For instance, following the earlier example (not illustrated in FIG.1), a first server may be connected to the aggregation switch, the second server, and the third server. More specifically, whereas FIG. 1 shows the use of only two ports on each NHC, the other ports on each NHC may form additional connections to one or more of the other NHCs shown, or more generally another NHC associated with another server that is not shown. Use of the additional ports may be used to increase the bandwidth or throughput required by a server.

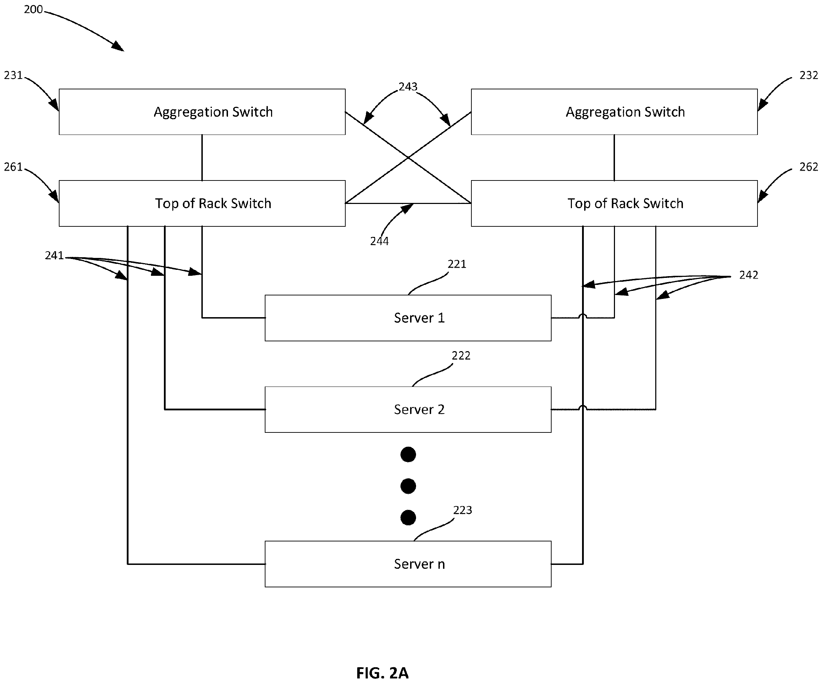

FIG.2A illustrates a traditional HA network model, based on current industry standards. Model 200 features two aggregation switches 231 and 232 connected to two ToR switches 261 and 262 by links 243. The ToR switches 261 and 262 may also be connected to each other via link 244. The model 200 also features servers 221-223, each server 221- 223 connected to the ToR switches via links 241 and links 242. A HA model is a system or model design that aims to ensure a level of operational performance using techniques, such as redundancy, load balancing, etc. An HA model is intended to eliminate single points of failure.

ToR switches 261, 262 are each connected to each server 221, 222, 223, the aggregation switches 231, 232, and to each other via link 244. Each of the servers in FIG. 2A have at least one physical connection to a ToR switch. Links 241 and links 242 may represent three discrete links each, such that there is one cable connecting ToR switch 261 to server 231, one cable connecting ToR switch 261 to server 232, and another cable connecting ToR switch 261 to server 223.

A ToR switch is networking hardware configured to assist in data management, e.g., in a data center, by enabling network consolidation and reducing the amount of adapters and cables required. A ToR switch may provide a unified converged fabric over Ethernet for LAN and SAN traffic. A ToR switch typically connects data center hardware components, such as aggregation switches to servers or connects servers to each other.

A ToR switch is responsible for creating and storing a set of rules relating to the servers connected to the switch and pathways to send data to these servers. This set or rules may be consulted to help map the destinations within a data center and forward data. The destinations may be servers, devices or any hardware within the data center connected to the ToR switch. This set of rules may be stored in the form of a table. In some examples, the table may include information such as the physical addresses of devices on the same network, the port each device is connected to the switch, medium access control ("MAC") addresses of the servers or devices within the network, IP addresses of the network, etc. For example, the tables may be in the format of a content addressable memory ("CAM"), ternary content addressable memory ("TCAM"), address resolution protocol ("ARP"), routing tables, or any suitable memory format. In some examples, the set of rules or tables may be stored at the aggregation switch. The set of rules may be unique to the switch it is associated with.

Data may be sent to a data center configured as model 200 over a network and received at aggregation switch 231. The data may include delivery information relating to the destination of the data in the form of a MAC address. The MAC address may set the destination server as server 222. Aggregation switch 231 may process the data and forward the data to ToR switch 262. Based on the MAC address of the data, ToR switch 262 may consult its CAM table to forward the data to server 222 via link 242. In some examples, the ToR switch may determine, based on its CAM table, the data's destination server is not within the rack of servers connected to the ToR switch and may forward the data back up to an aggregation switch to be routed to the correct rack of servers with the destination server.

Model 200 eliminates the single point of failure and can withstand a ToR failure or a server port failure. Following the above example with data destined for server 222, in the event that there is a failure at ToR switch 262 or the port at server 222, the aggregation switch 231 may direct the data to ToR 261 via link 243 or link 244. This model robustness comes with a cost of having an additional ToR and the links required to achieve the physical connection with this additional ToR. This model 200 also requires additional physical space, power and cooling needs associated with this extra equipment to achieve HA.

Referring back to FIG. 1, architecture 100 does not require a ToR switch to achieve HA because there is no single point of failure as there are always at least two paths for data to reach the intended destination, albeit one path could be slightly more costly than the other. Described in more detail below, architecture 100 inherently provides HA, as there are two possible paths from the servers to the aggregation switch, either link 141 or link 142. This is done without the use of a ToR switch - mitigating or eliminating that cost.

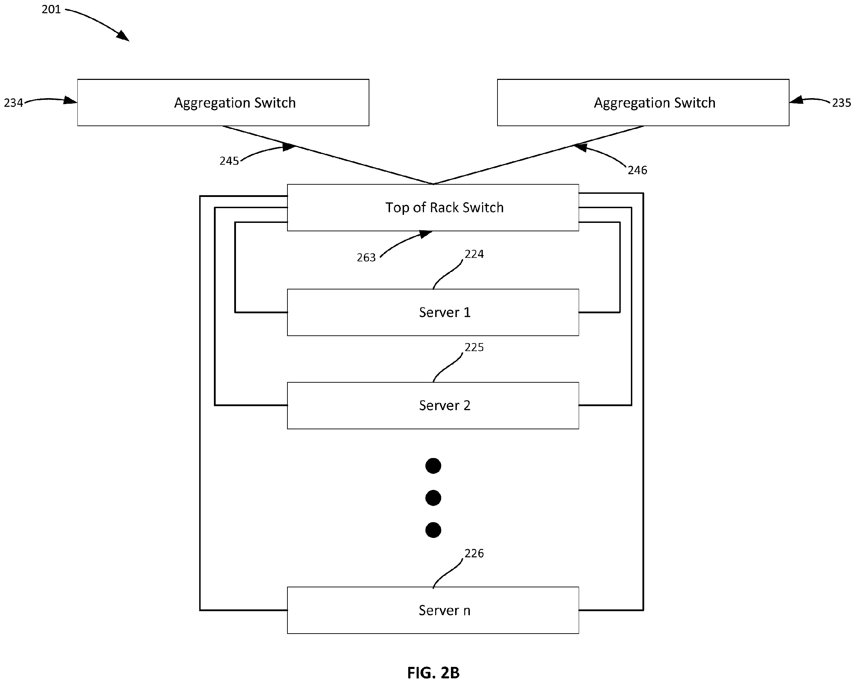

FIG.2B illustrates an alternative industry model. Model 201 features two aggregation switches 234 and 235 connected to one ToR switch 263 by links 245 and 246. Model 201 also features servers 224-226, each server 224-226 connected to the ToR switch.

Model 201 is a traditional alternative to the HA design depicted as model 200. The single ToR switch design of model 201 may be useful in scenarios where there is a limitation of space, power and cooling resources. In model 201, however, the single ToR may become a single point of failure if there is a failure at the ToR switch or a server port. This will result in an outage for all servers connected to that ToR and can cause an outage to the entire data center depending on the location within the network topology of the ToR.

In one example, data may be sent using the architecture of model 201 over a network and received at aggregation switch 234. The data may include delivery information relating to the destination of the data in the form of a MAC address. The MAC address may set the destination server as server 225. Aggregation switch 234 may process the data and forward the data to ToR switch 263. Based on the MAC address of the data, ToR switch 263 may consult its CAM table to forward the data to server 222. In this example, if there is a failure at ToR 263, the data will fail to be forwarded to server 222.

Another alternative to models 200 and 201 may be to eliminate the ToR switch altogether in order to save costs. In this alternative model the aggregation switches are connected directly to the servers. With this alternative model, a large number of ports are required on the aggregation switch. The cost of using a large number of ports on the aggregation switch is counterproductive, by increasing the workload of the aggregation switches. Further, the aggregation switch is usually a considerable distance from the servers on a rack, thus such connections also become cumbersome and impractical.

A data center configured in accordance with the architecture 100 provides HA network capabilities without the additional space, power and cooling requirements. Such a data center configuration eliminates the need for a ToR switch by connecting each server in a ring configuration as shown in FIG. 1, and couples at least two servers to an aggregation switch. Data may be directed through these connections to and from the aggregation switch. Moreover, by incorporating a NHC at each server, the network architecture does not pull from the processing resources of the servers, but instead moves data exclusively through the NHCs and the aggregation switch.

Additionally, the architecture or topology 100 of FIG.1 is advantageous because it allows for a homogeneous computer architecture that simplifies maintenance requirements. Existing configurations including at least one ToR switch require the ToR switch to undergo a different upgrade process and software release cadence than the server operating systems. When compared to existing data center network architectures containing a combination of aggregation switches, ToR switches, and servers, the architecture or configuration 100 offers a single life cycle management process for operational maintenance, such as updating the software on the servers and NHCs, thus, making maintenance of the data center more efficient.

Directing data at the NHC may also provide an extra layer of security by offering security isolation to run infrastructure software and customer/tenant software on physically separate sockets. In some examples, the NHC may encrypt data as it is transferred from the host server or as it is routed through the NHC. For example, the data may be encrypted at the NHC as the data is being routed from the host server's operating system. By encrypting data at a NHC, encryption can be offloaded from the server or host CPU onto the NHC computing cores. Further, providing encryption via an NHC allows for encryption on the fly potentially reducing latency. In some examples, the host servers would not play a role in data encryption but may store the key to decrypt the data. In some examples, the NHC may store and use a key to decrypt encrypted data.

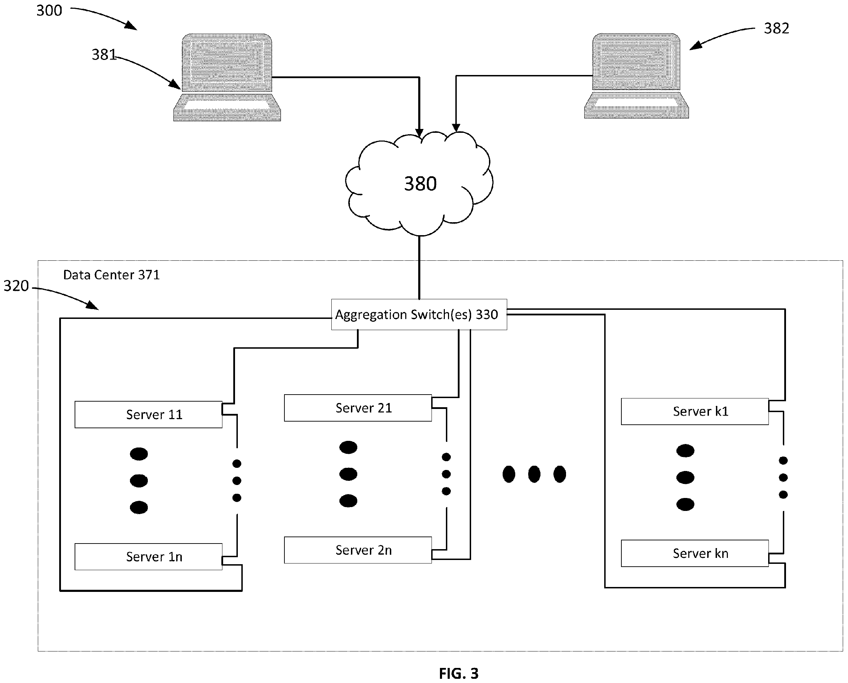

FIG.3 illustrates an example system for directing data units through network architecture or system 300 that includes NHCs in each server. In particular, system 300 includes a network 320 that is configured in accordance with an aspect of the disclosed technology and implemented in a data center 371. Data center 371, via network 320, is configured to receive data units from one or more user devices 381 and 382. A data unit may be in the form of one or more data packets or data frames. As such, the data unit includes a header, payload and a trailer. As an example, a data unit may be an IPv4 or IPv6 packet. In the context of frame, e.g., at layer 2 of the OSI stack, the data unit is a frame which will typically include a single network packet. A data unit may include data such as text, images, numeric, multimedia, audio, video, etc., as its payload. The data units being processed through the data center 371 may include packets sent by user device 381 and destined for user device 382.

Network 320 may include one or more aggregation switches 330. The aggregation switch 330 will typically be a networking device that allows multiple network connections to be bundled together into a single link. The aggregation switch may gather data units from outside sources, such as user devices 381 and 382 over network 380. The aggregation switch 330 may be configured to receive data from access switches, perform local routing, filter the data, balance traffic, and manage QoS priority. The aggregation switch 330 may also process the data for security mechanisms, perform IP address translation, and manage multicast.

The network 380 may be any combination of one or more wired or wireless networks. The network may include any one or more of the Internet, an intranet, a wide-area network (WAN), a local-area network (LAN), a wireless network, a digital subscriber line (DSL) network, a frame relay network, an asynchronous transfer mode (ATM) network, a virtual private network (VPN), and/or any other suitable communication network.

As shown, the data center 371 includes multiple servers that are coupled together as individual rings via aggregation switch 330. Specifically, servers 11 through 1n are chained together to form a first ring, servers 21 through 2n are coupled to form a first ring, etc., in accordance with the network architecture described in FIG. 1. The servers are coupled via the ports of NHCs within each server. In some examples, each group of servers that form a given ring may be housed together in a rack. The use of a rack is not however necessary as the servers can be configured in the ring architecture shown whilst not housed in a rack. A server may be any suitable server for receiving, manipulating, calculating, or storing data. In some examples, a server can process and store data units once the data has been routed to their destination server.

The user devices 381 and 382 can include any one or more user devices suitable for sending, receiving or requesting data. For example, the user devices may include a mobile phone, a tablet computer, a desktop computer, a wearable computer, a television, speakers, a media player, a desktop computer, a vehicle entertainment system, and/or any other suitable type of user device. The user devices may be connected to the network via wired or wireless connections.

Further to the example systems described above, example methods are now described. Such methods may be performed using the systems described above, modifications thereof, or any of a variety of systems having different configurations. It should be understood that the operations involved in the methods herein need not be performed in the precise order described. Rather, various operations may be handled in a different order, or simultaneously, and operations may be added or omitted.

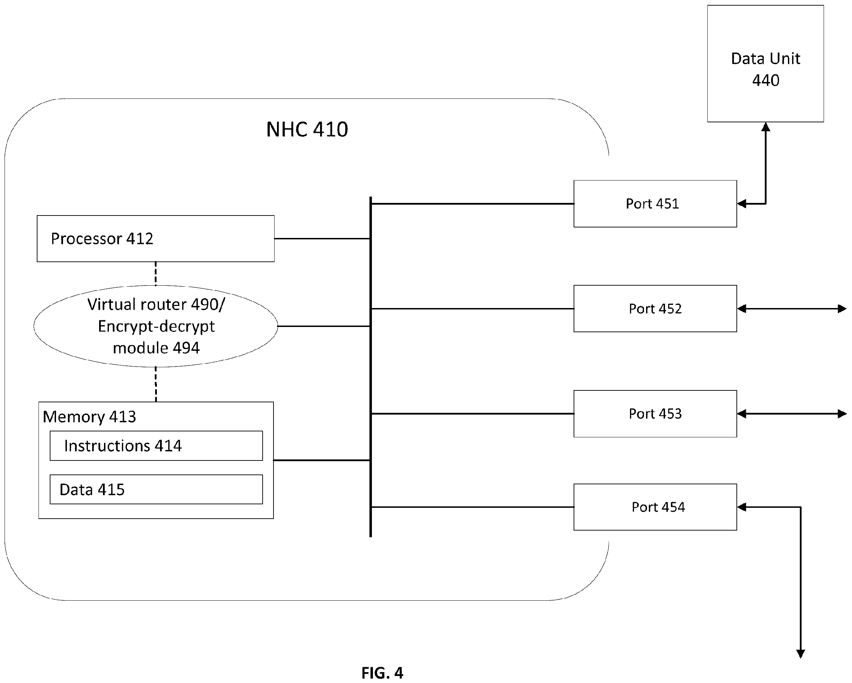

FIG.4 is a schematic illustration of NHC associated with a server as described above. NHC 410 includes processor 412 and ports 451-454. A data unit 440 may be received by NHC 410 via a connection to adjacent hardware within the rack of servers in a data center, such as through a link at port 451 and port 454. Ports 452 and port 453 may be used to connect the NHC to other components of a network architecture, such as non-adjacent servers, an aggregation switch, or other hardware within a rack of servers or within a data center. The order of ports is not intended to be limiting and the server may be connected by alternate connections than those described above.

NHC 410 is an advanced networking device that will typically include programmable accelerators and ethernet connectivity. NHC 410 may be embedded in or configured onto the servers. Specifically, a NHC may take the form of pluggable network interface card that is inserted into a slot of a server's chassis and operates to manage communications and data flow to and from the server. The NHC 410 may be configured so that it is responsible for accelerating and managing infrastructure functions using tightly coupled, dedicated, programmable cores. In some examples, the programmable cores of the NHC 410 may comprise one or more processors 412. The number and type of programmable cores may vary depending on the NHC make and generation. The NHC 410 is adapted to offer full infrastructure offload in some cases. In some examples, the NHC 410 may use the processor 412 to process and direct the data units without any cost to the host server and its processing resources. By offloading the transporting of data to the processor 412 of the NHC 410 only, the server may dedicate the processing resources to other processing, thus increasing performance and efficiency of the data center as a whole.

The processor 412 of NHC 410 can include any suitable hardware processor, such as a microprocessor, a microcontroller, digital signal processor(s), dedicated logic such as provided via an ASIC, and/or any other suitable circuitry for implementing its functions. The processors 412 may be any conventional processors, such as commercially available CPUs. The processor 412 can be a well-known processor or other lesser-known types of processors. Alternatively, the processors can be dedicated components such as an application specific integrated circuit ("ASIC"') or other hardware-based processor. Although not necessary, the NHC 410 may include specialized hardware and software components to perform specific computing processes.

In some examples, processor 412 is configured using instructions 414 and data 415 stored in memory 413 to instantiate and run a virtual router 490. In other examples, virtual router 490 may be formed as a hardware router, e.g., an ASIC, on the NHC 410. The virtual router enables routing and/or switching functionality at the NHC. The virtual router learns, distributes, and advertises the pathways from and to its adjoining connected virtual router instance on an adjoining connected NHC or the aggregation switch. The virtual router 490 uses a programmable core of the NHC, specifically, a core in the processor 412 to direct and transport the data unit. The virtual router 490 advertises the pathways and the cost of the pathways to other virtual routers within the rack of servers. In some examples, the virtual router advertises routes to other components of the data center, such as an aggregation switch.

As is also shown in FIG. 4, in addition to a virtual router 490, the NHC 410 may include instructions and data that allow the processor 412 to implement encrypt-decrypt module 494. In some examples, the NHC may encrypt data using the encrypt-decrypt module 494 as it is transferred from the host server or as it is routed through the NHC 410. For example, the data may be encrypted using the encrypt-decrypt module 494 as the data is being routed from the host server's operating system. By encrypting data at a NHC 410, encryption can be offloaded from the server or host CPU onto the NHC computing cores. Further, providing encryption via an NHC allows for encryption on the fly potentially reducing latency. In some examples, the host servers would not play a role in data encryption but may store the key to decrypt the data. In some examples, the NHC may store and use a key to decrypt encrypted data as a part of the instructions of the encrypt-decrypt module 494.

NHC 410 includes a memory 413. The memory 413 can store information accessible by other components of the NHC 410, such as the processor 412. The accessible information of memory 413 may include instructions that can be executed by the components of the NHC 410, such as processor 412, and that can be retrieved, manipulated or stored by the processor 412. The memory 413 may be a type of non-transitory computer readable medium capable of storing information accessible by the processor 412, such as a hard-drive, solid state drive, tape drive, optical storage, memory card, ROM, RAM, DVD, CD-ROM, write-capable, and read-only memories.

As shown, memory 413 stores instructions 414 and data 415. The instructions 414 can be a set of instructions executed directly, such as machine code, or indirectly, such as scripts, by the processor 412. In this regard, the terms "instructions," "steps," and "programs" can be used interchangeably herein. The instructions 414 can be stored in object code format for direct processing by the processor 412, or other types of computer language including scripts or collections of independent source code modules that are interpreted on demand or compiled in advance. Functions, methods, and routines of the instructions are explained in more detail in the foregoing examples and the example methods below. The instructions 414 may be executed to identify the destination of the data unit that may be used to transport the data unit in the disclosed network architecture. The instructions 414 may further be executed to calculate the distance to the destination of the data unit based on the location of the aggregation switch or the server.

Data 415 stored in memory 413 can be retrieved, stored or modified by the processor 412 in accordance with the instructions 414 stored in memory 413. The data 415 may relate to potential data routes. Specifically, data 415 will typically take the form of a routing table that stores rules that specifies where data packets will be directed. Delivery information on data moved through the network architecture may be used to populate and update the routing table. The routing table may relate to IP addresses within or outside of a data center in the same or other networks. For instance, although the system and method are not limited by a particular data structure, the data 415 can be stored in computer registers. The data 415 can also be formatted in a computer-readable format such as, but not limited to, binary values, ASCII or Unicode. Moreover, the data 415 can include information sufficient to identify relevant information, such as numbers, descriptive text, proprietary codes, pointers, references to data stored in other memories, including other network locations, or information that is used by a function to calculate relevant data.

In some examples, an NHC 410 may implement multiple virtual routers 490. In this regard, each virtual router 490 creates a routing table from advertised pathways and uses the routing table to determine which pathways to direct a data uni. The routing table is utilized to help the virtual routers make effective directing decisions. The routing table may be generated using instructions 414 and data 415. The routing table may be stored within memory 413 and accessed by processor 412 to execute directing the data unit along a given pathway, e.g., least cost.

The routing tables of the virtual routers may serve a similar function as the set of rules used by a ToR switch, described in Fig 2A and 2B. More specifically, the virtual routers may use the routing table to determine a pathway for the data unit to reach its intended destination, e.g., a least cost path between two NHCs, servers, etc. The pathway may be determined using a routing algorithm. In some examples, an optimal pathway may be determined based on the balance of various criteria, such as length of the pathway, available processing resources of the NHCs along the pathway, etc. For example, a virtual router may determine the pathway based on the optimal pathway for the data unit. The optimal pathway may be the pathway with the fewest number of servers or hops. For example, for a data unit intended for server 2, a virtual router may determine the pathway on which to direct the data unit is through server 1 to server 2, instead of through server n and server 3 to server 2, because there are less 'stops' that need to be made. In other examples, an optimal pathway may be a pathway that has more processing resources to direct the data unit. For example, for a busy server, the virtual router may determine that the less used or more available pathway between the possible pathways is the optimal pathway because there are more resources free to direct the data unit. A simple interior gateway routing protocol ("IGP") or static routes may be implemented to accomplish routing between the virtual routers. For instance, each NHC may run a border gateway protocol ("BGP") or a BGP-like process to implement route advertisements.

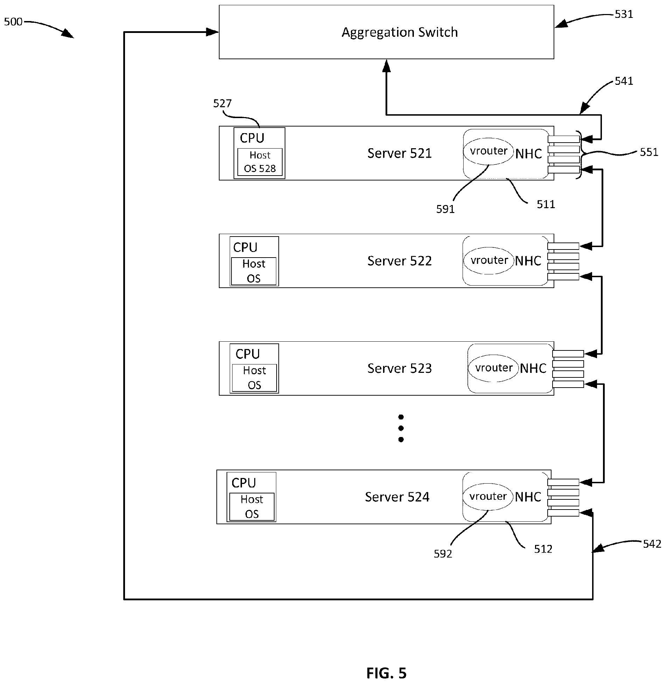

FIG. 5 illustrates a diagram of a network architecture configured to perform distributed routing of data units. In particular, network architecture 500 includes an aggregation switch 531 connected to server 521 and server 524 via link 541 and link 542, respectively. Server 521 and server 524 are chained or connected to a plurality of servers in between via NHCs on each server, such as NHCs on servers 522 and 523. Each NHC includes a plurality of ports 551 to facilitate the connections to components of architecture 500, such as aggregation switch 531 and other servers, via the respective NHCs. In some examples, the NHCs may include a virtual router, such as vrouter 591 and vrouter 592. The network architecture includes at least two NHCs with a virtual router.

The servers may also include a server CPU 527. The server CPU may be any suitable processing unit within the server and separate from the NHC processors responsible for routing data. The server may perform all non-directing and non-routing processing for the server. The server CPU may perform tasks such as receiving, manipulating, calculating, or storing data received at the host server. The server CPU may be specialized to perform specific tasks. The virtual router approach employed in this technology takes no overhead from the processing resources of the host server, leaving the processing resources of the host server available entirely to other applications.

The server CPU may include a host operating system (OS), such as host OS 528. The host OS 528 may be the software that supports the server's basic functions, such as executing applications and controlling peripherals. Host OS 528 may also be responsible for memory management, processor management, device management, file management and security. In some examples, host OS 528 may be Red Hat Enterprise Linux, Windows Server, Mac OS X Server, SUSE Linux Enterprise Server, or Unix FreeBSD, etc.

Systems that support cloud computing are typically supported by commercial-off-the-shelf hardware to simplify time-to-market. In such a system, a server with general purpose processors is generally used. These host processors are shared between the infrastructure components and the workloads. With heavy demands of processing as the workloads scale this network architecture model becomes increasingly inefficient as the expanding demands from the workloads are not able to be accommodated by the existing processors which are shared between the infrastructure and the workloads themselves.

In some examples, a data unit may be directed along chained architecture 500 using distributed routing methods. For distributed routing, each NHC within the network architecture must have a virtual router. In an example operation of distributed routing in accordance with the disclosed technology, a data unit, based on the IP address, is determined to be destined for server 521. The data unit is received at aggregation switch 531. Aggregation switch 531 may decide, depending on the routing table learnt from the virtual routers of the NHCs in architecture 500, the routing protocols being used, the minimum cost associated with a given routing protocol or the routing protocols that are of equal cost. In this regard, aggregation switch 531 may learn routes to use for directing a data unit by referencing the routing tables stored in the NHCs for those servers that it is coupled to, such as servers 521 and 524. Alternatively, the aggregation switch may obtain information from the NHC associated with a given server and store the routing information in its own routing table(s).

In line with the above example of distributed routing, data may be transported in architecture 500 as follows. A data unit received at aggregation switch 531 is transported to one of the servers shown. For instance, aggregation switch 531 may determine that the optimal path for the data unit destined for server 521 is via link 541. Aggregation switch 531 then directs the data unit to NHC 511 of server 521. NHC 511 then, based on the routing table of vrouter 591, forwards the data unit to the host OS 528 of server 521, completing delivery of the data unit.

In another example of distributed routing, a data unit, based on its IP address, is determined by aggregation switch 531 to be destined for server 522. Aggregation switch 531 may refer to the routing tables of the virtual routers to which it is directly coupled to (e.g., connected to as part of the ring architecture though there may be other equipment between the virtual router or server) determine the optimal pathway for the data unit. The aggregation switch 531 may acquire information about the routing tables in the individual NHCs via advertisements generated by the respective virtual routers. In some examples, the aggregation switch may learn the available routes by accessing the routing tables of the virtual routers to which it is directly coupled, such as the NHCs associated with vrouter 591 and vrouter 592. As shown in FIG.5, there are two possible paths the aggregation switch 531 may select from to direct the data unit destined for server 522. Using path 1, the data unit will travel from aggregation switch 531 to NHC 511 of server 521, to NHC of server 522 and to the host OS of server 522. Alternatively, using path 2, the data unit will travel from aggregation switch 531 to NHC 512 of server 524, to the NHC of server 523, to the IPU of server 522, to the host OS of server 522. Aggregation switch 531 may determine path 1 is the optimal pathway and direct the data unit to NHC 511 of server 521. In distributed routing, at each step of the path, the virtual routers will consult their routing tables to determine the optimal path of the data unit from that point. For example, if path 1 is selected, vrouter 591, in accordance with its routing table, transports the data unit to the vrouter of server 522. The vrotuer of server 522, in accordance with its routing table, determines the data unit has reached its destination server and moves the data unit, via its processors, to the host server CPU and host OS.

In yet another example of distributed routing in accordance with the disclosed technology, a data unit, based on its IP address, is destined for delivery to server 523. The data unit is received at aggregation switch 531 over a network. Aggregation switch may refer to the routing tables of the virtual routers to which it is directly connected to determine the optimal pathway for the data unit. If the chained network has four servers and follows the configuration described above, there are two possible paths the aggregation switch may select from. As shown in FIG.5, there are two possible paths the aggregation switch 531 may select from to direct the data unit destined for server 523. Using path 1, the data unit will travel from aggregation switch 531 NHC 511 of server 521, to the NHC of server 522, to the NHC of server 523, to the host OS of server 523. Alternatively, using path 2, the data unit will travel from aggregation switch 531 to NHC 512 of server 524, to the NHC of server 523, to the host OS of server 523. Aggregation switch 531 may determine path 2 is the optimal pathway and transport the data unit to NHC 512 of server 524.

In some examples, where each of the servers have a virtual router, if one server fails, there is no impact on the data unit pathway since the virtual routers will re-learn the optimal path automatically. For example, following the example above, if there is a failure at a port of the NHC of server 523 that connects to NHC 512 of server 524, vrouter 592 may automatically redirect the data unit to vrouter 591 to be directed along path 1. This functionality eliminates single point of failure issues.

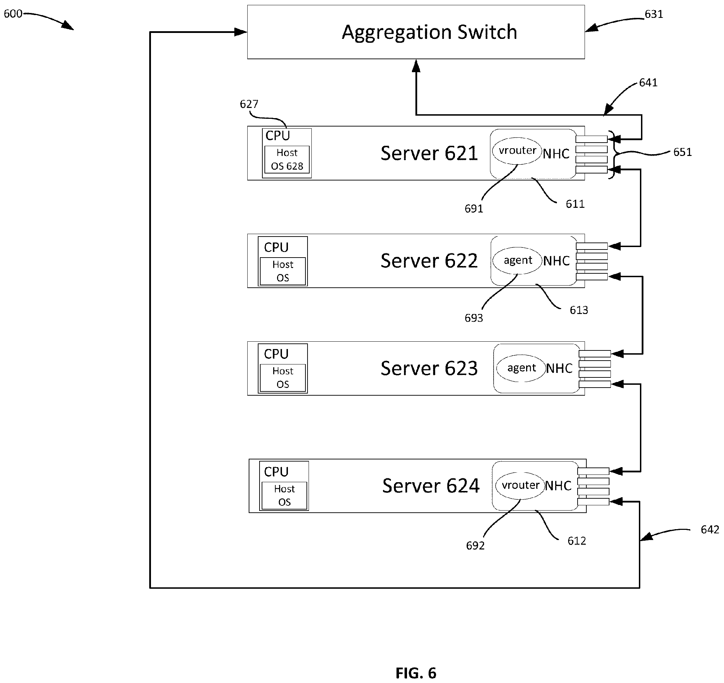

FIG.6 illustrates a diagram of a network architecture configured to perform centralized routing. In particular, architecture 600 includes an aggregation switch 631 connected to server 621 and server 622 via link 641 and link 642, respectively. Server 621 and server 622 are chained or connected to a plurality of servers in between via NHCs on each server, such as NHC 611 and NHC 612. Each NHC includes a plurality of ports 651 to facilitate the connections to components of architecture 600, such as aggregation switch 631 and other servers, via the respective NHCs. In some examples, the NHCs may include a virtual router, such as vrouter 691 and vrouter 692. The servers include a CPU, such as server CPU 627. The CPUs may include a host OS such as host OS 628. The servers, the server CPU and host OS may function as described above in FIG.5.

In some examples, an NHC within architecture 600 may include a routing agent 693, as illustrated in NHC 613. The routing agent 693 may be an alternative to a virtual router. The routing agent is a software component that performs routing tasks, such as detecting link metrics and refreshing routing tables with special routing signaling messages. The routing agent may be a lightweight agent that may be used to receive updates from the virtual routers running on servers within architecture 600. The routing agent may not construct or store routing tables, but rather may send or advertise information to virtual routers to update the virtual router's routing table.

As depicted in FIG.6, at least two NHCs, such as NHC 611 and NHC 612, include a virtual router and the remaining servers of the chained network include a routing agent, such as NHC 613. The NHCs hosting virtual routers, NHC 611 and NHC 612, will learn and distribute routing information from the rest of the servers and populate the routing table in each of the memories of the virtual routers. This configuration conserves processing resources of the NHC cores since not all NHCs will run a virtual router. The virtual routers on the at least two NHCs may use remote procedure protocol (RPC) to program flow rules and routes onto the other NHCs through the routing agents running on them. These flow rules and routes may be source and destination port numbers. Data unit directing will be similar to that of the examples described in FIG.5

In some examples, the data forwarding mechanism remains essentially the same as distributing routing except the virtual routers are not consulted at every step of the pathway. In an example of centralized routing, a data unit, based on its MAC address, is determined to be destined for server 622. When the data unit arrives at aggregation switch 631, aggregation switch 631 uses the routing information learnt from vrouter 691 and from vrouter 692. Aggregation switch 631 may determine there are 2 possible paths. Using path 1, the data unit will travel from aggregation switch 631 the NHC 611 of server 621 to the NHC 613 of server 622 to the host OS of server 622. Alternatively, using path 2, the data unit will travel from aggregation switch 631 to the NHC 612 of server 624 to the NHC of server 623 to the NHC 613 of server 622 to the host OS of server 622. Aggregation switch 631 may determine path 1 is the optimal pathway because it features less stops than path 2 and transports the data unit to NHC 611 of server 621.

In another example of centralized routing, a data unit, based on its MAC address, is determined to be destined for server 623. The data unit is received at aggregation switch 631 over a network. There are two possible paths the aggregation switch 631 may select from to direct the data unit destined for server 623. Using path 1, the data unit will travel from aggregation switch 631 the NHC 611 of server 621 to the NHC of server 622 to the NHC of server 623 to the host OS of server 623. Alternatively, using path 2, the data unit will travel from aggregation switch 631 to the NHC 612 of server 624 to the NHC of server 623 to the host OS of server 623. Aggregation switch 631 may determine path 1 is the optimal pathway because there is currently less traffic compared to path 2 and direct the data unit to NHC 611 of server 621. If there is a failure at a port of the NHC of server 622 that connects to the NHC of server 624, agent 693 may send the information of this failure to vrouter 691. Vrouter 691 may update its routing table to reflect this outage. Vrouter 691, based on this change, may redirect the data unit to path 2 to move the unit to its destination server, server 623.

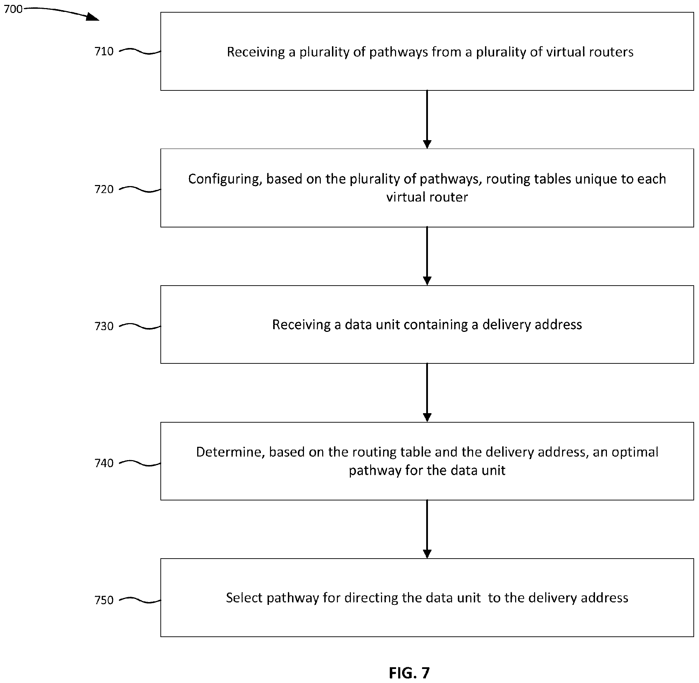

FIG. 7 illustrates an example method 700 for routing data units using the network architecture according to aspects of the disclosure. The following operations do not have to be performed in the precise order described below. Rather, various operations can be handled in a different order or simultaneously, and operations may be added or omitted.

In block 710, an aggregation switch receives a plurality of pathways from a plurality of virtual routers. The aggregation switch is coupled to at least two servers that include NHCs configured to implement routing and/or switching functionality. The NHCs, for example, each include at least one virtual router that perform routing and/or switching functionality, e.g., operate as Layer 3 switches. The virtual routers determine pathways relate to the routes over which data should be directed to reach its destination. In some configurations the NHCs may include a routing agent in place of a router.

In block 720, the virtual routers may configure, based on the pathways, routing tables. The routing tables are unique to each virtual router. The virtual router may continuously update the routing table based on updated pathways sent from other virtual routers. The routing table may comprise at least two pathways.

In block 730, when a data unit includes a destination address that corresponds to one of the plurality of servers associated with the aggregation switch, the aggregation switch receives and processes the data unit.

Specifically, as illustrated at block 740, the aggregation switch accesses a routing table stored by one or more virtual routers to determine the pathway onto which the packet should be directed to reach its destination.

In block 750, the aggregation switch chooses the pathway based on the determination at block 740 that should be used to route the data unit to the delivery address. More specifically, with reference to FIG. 1 for example, the aggregation switch 131 determines whether the data unit should be first sent to NHC 111 or NHC 114. Because the servers are configured in a ring via the NHCs, aggregation switch 131 may determine to direct the data unit to NHC 114 and server 124 because it will reach its destination, say server 123, sooner because that pathway currently has more bandwidth to deliver the packet. Alternatively, for that or other reasons, the switch 131 that it may be better to have the packet delivered by first sending it to NHC 111.

The disclosed technology may be practiced as a method, apparatus, or system that includes the following features:
**F1.** A system for configuring a data center, comprising:
   an aggregation switch, configured to receive data communicated over a network,
   a plurality of network hardware components, comprising a first network hardware component and a second network hardware component; and
   a plurality of servers housed in a rack, each server having a network hardware component, wherein a first network hardware component is associated with a first server of the plurality of servers and a second network hardware component is associated with a second server of the plurality of servers,
   wherein the first network hardware component is coupled to the aggregation switch and to the second network hardware component and the second network hardware component is coupled to the aggregation switch, and
   wherein the aggregation switch, the first network hardware component and the second network hardware component are coupled together in a ring architecture.
**F2.** The system of F1, wherein at least the first network hardware component includes a first virtual router and the second network hardware component include a second virtual router.
**F3.** The system of any one of **F1** or **F2**, wherein each virtual router receives routes from the other virtual router and generates a routing table based on the routes received.
**F4.** The system of any one of **F1** to **F3**, wherein each virtual router advertises routes to the aggregation switch.
**F5.** The system of any one of **F1** to **F4**, wherein only the first and second network hardware components have virtual routers, and the remaining network hardware components of the plurality of network hardware components have routing agents.
**F6.** The system of any one of **F1** to **F5**, wherein the network hardware components have at least four connection ports.
**F7.** The system of any one of **F1** to **F6**, comprising a third network hardware component associated with a third server, the third network hardware component coupled to the first network hardware component and the second hardware network component unit.
**F8.** The system of any one of **F1** to **F7**, wherein a given network hardware component has a central processing unit core distinct from processing devices of a given server that includes the given network hardware component.
**F9.** The system of any one of **F1** to **F8**, wherein each network hardware component comprises a network interface controller or card, or an infrastructure processing unit.
**F10.** A communication system, comprising:
   an aggregation switch;
   a plurality of servers, comprising a first server and a second server; and
   a plurality of network hardware components, a first network hardware component included in the first server and a second network hardware component included in the second server, each of the first network hardware component and second network hardware component configured to manage network connections for, respectively, the first network hardware component and second network hardware component, and
   wherein the first network hardware component includes a first virtual router and the second network hardware component includes a second virtual router, each include a virtual router operable to advertise routes to the other virtual router.
**F11.** The communication system of **F10**, wherein each virtual router is operable to advertise routes to the aggregation switch.
**F12.** The communication system of any one of **F10** to **F11,** wherein each virtual router is operable to advertise a cost associated with a route to the aggregation switch.
**F13.** The communication system of any one of **F10** to **F12,** wherein the first network hardware component has a first port and a second port and the second network hardware component has a third port and a fourth port and wherein the first port of the first network hardware component is connected to the aggregation switch and the second port of the first network hardware component is coupled to the third port of the second network hardware component, and the fourth port of the second network hardware component is coupled to the aggregation switch.
**F14.** The communication system of any one of **F10** to **F13,** wherein the first network hardware component is configured to encrypt data generated by the first server.
**F15.** The system of any one of **F10** to **F14,** wherein the network hardware components are a data processing unit, central processing unit, or a network interface controller/card with processing capabilities.
**F16.** A method of directing a data unit, comprising:
   receiving, by one or more processors, a plurality of pathways from a plurality of virtual routers, wherein the plurality of virtual routers is configured onto a plurality of network hardware components, wherein the network hardware components are configured onto a plurality of servers of a data center, wherein the pathways relate to routes to the plurality of servers;
   configuring, at each virtual router based on the pathways, routing tables, wherein the routing tables are unique to each virtual router;
   receiving, at the data center by one or more processors, a data unit containing a delivery address, wherein the delivery address corresponds to one of the plurality of servers in the data center;
   selecting, by one or more processors based on the routing table and delivery information, an optimal pathway for the data unit; and
   directing, by one or more processors, the data unit along the optimal pathway to the delivery address.
**F17.** The method of **F16**, wherein the data center includes an aggregation switch; and wherein the plurality of network hardware components includes at least a first network hardware component and a second network hardware component.
**F18.** The method of any one of **F16** or **F17,** wherein the first network hardware component is coupled to the aggregation switch and to the second network hardware component and the second network hardware component is coupled to the aggregation switch, and
   wherein the first network hardware component and the second network hardware component are coupled together via a chain configuration.
**F19.** The method of any one of **F16** to **F18,** wherein only the first and second network hardware components have virtual routers, and the remaining network hardware components of the plurality of network hardware components have routing agents.
**F20.** The method of any one of **F16** to **F19,** wherein the routing table comprises at least two pathways.
**F21.** The method of any one of **F16** to **F20,** wherein the routing table is updated based on current routes advertised by the plurality of virtual routers.
**F22.** The method of any one of **F16** to **F21,** wherein the network hardware component is a data processing unit, central processing unit, or a network interface controller/card with processing capabilities.
**F23.** A system, comprising:
   a first server; and
   a first network hardware component installed in the first server and configured to connect the first server to a network,
   wherein the first network hardware component includes a first virtual router configured to advertise routes to a second virtual router housed in a second server.
**F24.** The system of **F23**, wherein the first network hardware component is installed in a slot on the first server for housing a network interface card.
**F25.** The system of any one of **F23** or **F24,** wherein the first network hardware component is installed in a slot on the first server for housing an infrastructure processing unit.
**F26.** The system of any one of **F23** to **F25,** wherein the first network hardware component includes a first processing device distinct from other processing devices associated with the first server.
**F27.** The system of any one of **F23** to **F26,** wherein the first processing device is configured to instantiate the first virtual router.
**F28.** The system of any one of **F23 to F27,** wherein the first virtual router is configured to advertise routes to an aggregation switch.
**F29.** The system of any one of **F23** to **F28,** wherein the first virtual router, the aggregation switch and the second virtual router are arranged in a ring configuration in which the aggregation switch is coupled to a first port on the first network hardware component and a second port on the first hardware component is coupled to a first port on a second hardware component associated with the second virtual router, and a second port on the second hardware component is coupled to the aggregation switch.
**F30.** The system of any one of **F23** to **F29,** wherein the first virtual router is configured to operate as Layer 3 switch based on an Open System Interconnect model.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the examples should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible implementations. Further, the same reference numbers in different drawings can identify the same or similar elements.

## Claims

1. A system for configuring a data center, comprising:
an aggregation switch, configured to receive data communicated over a network;
a plurality of network hardware components, comprising a first network hardware component and a second network hardware component; and
a plurality of servers housed in a rack, each server having at least one of the plurality of network hardware components, wherein the first network hardware component is associated with a first server of the plurality of servers and the second network hardware component is associated with a second server of the plurality of servers,
wherein the first network hardware component is coupled to the aggregation switch and to the second network hardware component and the second network hardware component is coupled to the aggregation switch, and
wherein the aggregation switch, the first network hardware component and the second network hardware component are coupled together in a ring architecture.

2. The system of claim 1, wherein at least the first network hardware component includes a first virtual router and the second network hardware component include a second virtual router.

3. The system of claim 2, wherein each virtual router receives routes from the other virtual router and generates a routing table based on the routes received; and/or
wherein each virtual router advertises routes to the aggregation switch.

4. The system of one of claims 1 to 3, wherein only the first and second network hardware components have virtual routers, and the remaining network hardware components of the plurality of network hardware components have routing agents.

5. The system of one of claims 1 to 4, comprising a third network hardware component associated with a third server, the third network hardware component coupled to the first network hardware component and the second hardware network component.

6. The system of one of claims 1 to 5, wherein a given network hardware component has a central processing unit core distinct from processing devices of a given server that includes the given network hardware component; and/or
wherein each network hardware component comprises a network interface controller or card, or an infrastructure processing unit.

7. A communication system, comprising:
an aggregation switch;
a plurality of servers, comprising a first server and a second server; and
a plurality of network hardware components, comprising a first network hardware component included in the first server and a second network hardware component included in the second server, each of the first network hardware component and second network hardware component configured to manage network connections for, respectively, the first network hardware component and second network hardware component, and
wherein the first network hardware component includes a first virtual router and the second network hardware component includes a second virtual router, each include a virtual router operable to advertise routes to the other virtual router.

8. The communication system of claim 7, wherein each virtual router is operable to advertise routes to the aggregation switch; and/or
wherein each virtual router is operable to advertise a cost associated with a route to the aggregation switch.

9. The communication system of claim 7 or claim 8, wherein the first network hardware component has a first port and a second port and the second network hardware component has a third port and a fourth port and wherein the first port of the first network hardware component is connected to the aggregation switch and the second port of the first network hardware component is coupled to the third port of the second network hardware component, and the fourth port of the second network hardware component is coupled to the aggregation switch.

10. The communication system of one of claims 7 to 9, wherein the first network hardware component is configured to encrypt data generated by the first server.

11. A system, comprising:
a first server; and
a first network hardware component installed in the first server and configured to connect the first server to a network,
wherein the first network hardware component includes a first virtual router configured to advertise routes to a second virtual router housed in a second server.

12. The system of claim 11, wherein the first network hardware component is installed in a slot on the first server for housing a network interface card; and/or
wherein the first network hardware component includes a first processing device distinct from other processing devices associated with the first server; and/or
wherein the first network hardware component is configured to instantiate the first virtual router.

13. The system of claim 11 or claim 12, wherein the first virtual router is configured to advertise routes to an aggregation switch.

14. The system of claim 13, wherein the first virtual router, the aggregation switch and the second virtual router are arranged in a ring configuration in which the aggregation switch is coupled to a first port on the first network hardware component and a second port on the first hardware component is coupled to a first port on a second hardware component associated with the second virtual router, and a second port on the second hardware component is coupled to the aggregation switch.

15. The system of one of claims 11 to 14, wherein the first virtual router is configured to operate as Layer 3 switch based on an Open System Interconnect model.
